(19) Europäisches Patentamt
European Patent Office
Office européen des brevets

(11) Veröffentlichungsnummer: **0 249 125 B1**

(12) **EUROPÄISCHE PATENTSCHRIFT**

(45) Veröffentlichungstag der Patentschrift: **16.10.91**

(51) Int. Cl.⁵: **H01B 1/12**

(21) Anmeldenummer: **87107941.4**

(22) Anmeldetag: **02.06.87**

# (54) Verfahren zur Erzeugung einer elektrisch leitfähigen Oberflächenschicht auf Formkörpern aus Kunststoffen.

(30) Priorität: **11.06.86 DE 3619606**

(43) Veröffentlichungstag der Anmeldung:
**16.12.87 Patentblatt 87/51**

(45) Bekanntmachung des Hinweises auf die Patenterteilung:
**16.10.91 Patentblatt 91/42**

(84) Benannte Vertragsstaaten:
**CH DE FR GB IT LI NL SE**

(56) Entgegenhaltungen:
**EP-A- 0 134 026**

(73) Patentinhaber: **BASF Aktiengesellschaft**
**Carl-Bosch-Strasse 38**
**W-6700 Ludwigshafen(DE)**

(72) Erfinder: **Aumueller, Alexander, Dr.**
**Brechlochstrasse 9**
**W-6700 Ludwigshafen(DE)**
Erfinder: **Neumann, Peter, Dr.**
**Franz-Schubert-Strasse 1**
**W-6908 Wiesloch(DE)**
Erfinder: **Blinne, Gerd, Dr.**
**Im Woogtal 7**
**W-6719 Bobenheim(DE)**
Erfinder: **Lindenschmidt, Gerhard, Dr.**
**Buchenweg 11**
**W-6906 Leimen(DE)**

**EP 0 249 125 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft ein neues Verfahren zur Erzeugung einer elektrisch leitfähigen Oberflächenschicht auf Formkörpern aus in organischen Lösungsmitteln löslichen oder quellbaren Kunststoffen, deren Leitfähigkeit auf einem hierin eingelagerten System von

- organischen Elektronenakzeptoren (I) einerseits und
- organischen Elektronendonoren (II), Jodiden (III) oder Gemischen von (II) und (III) als Elektronendonoren andererseits

beruht.

Kunststoffe haben im allgemeinen einen Oberflächenwiderstand von $10^{13}$ Ohm und darüber und sind daher gute elektrische Isolatoren. Formkörper aus Kunststoffen können sich daher stark elektrostatisch aufladen, was für viele Anwendungsbereiche unbedingt vermieden werden muß. Dieses trifft insbesondere dort zu, wo explosive Gas- oder Staubgasgemische durch Funkenentladung gezündet werden können.

Um Kunststoffe antistatisch auszurüsten, ist eine große Zahl von Zusätzen entwickelt worden. Diese Stoffe werden auf die Oberfläche von Formteilen aufgebracht (G. Balbach, Kunststoffe 67 (1977) 3). In der Regel verlieren sie aber nach kurzer Zeit ihre Wirksamkeit. Man hat auch Antistatika in die Kunststoffe eingearbeitet. Häufig verschlechtern sich dann die Eigenschaften des Kunststoffes oder die Zusätze diffundieren aus. Die Antistatika verleihen der Kunststoffoberfläche eine gewisse Hydrophilie, so daß sich ein von der Luftfeuchte abhängiger Wasserfilm an der Oberfläche bilden kann, der die Aufladung verhindert.

Um Kunststoffe antistatisch zu machen, muß der Oberflächenwiderstand auf $10^{10}$ Ohm und darunter vermindert werden.

Die zur Verhinderung der elektrostatischen Aufladung erforderlichen Oberflächenwiderstände reichen jedoch für zahlreiche Zwecke der Elektrotechnik und Elektronik nicht aus; vielmehr verlangt man hier Oberflächenwiderstände von höchstens $10^8$ Ohm. So werden z.B. in zunehmendem Maße Formteile benötigt, die elektromagnetische Felder abschirmen können. Natürlich richtet sich hier die Anwendung nach der erzielten Leitfähigkeit. Hierbei ist auch wichtig, daß die übrigen Eigenschaften der Kunststoffe, wie thermische und mechanische Beständigkeit, durch leitfähig machende Zusätze nicht beeinträchtigt werden.

Um Polymere elektrisch leitfähig zu machen, hat man versucht, anorganische, elektrisch leitende Substanzen, z.B. Metalle, Metalloxide, Metallsulfide, Ruß oder Graphit einzuarbeiten. Durch die für eine erwünschte Leitfähigkeit benötigte Menge von in der Regel 10 bis 30 Gew.%, bezogen auf den Kunststoff, verschlechtern sich die mechanischen Eigenschaften des Kunststoffes jedoch entscheidend.

Es wurden auch organische Zusätze mit hoher elektrischer Leitfähigkeit, die mit Kunststoffen besser verträglich sind, eingesetzt. Dazu gehören die sogenannten Charge-Transfer-Komplexe (CT-Komplexe) und Radikalionensalze. Bei den CT-Komplexen handelt es sich um Zweikomponentensysteme aus bestimmten organischen Verbindungen, die als Elektronenakzeptoren bzw. Elektronendonoren fungieren und die zusammen meist kristalline Komplexe mit frei beweglichen, die Leitfähigkeit bewirkenden Elektronen oder Defektelektronen bilden. Ähnlich verhält es sich bei den aus Jodiden und Elektronenakzeptoren gebildeten Radikalionensalzen. Hierbei gibt das $J^-$-Anion eine Ladung an den Elektronenakzeptor ab und wird zum elementaren Jod oxidiert. Es entsteht ein Elektronenakzeptor-Anion, in welchem das aufgenommene Elektron wiederum frei beweglich ist, so daß ein Kristallit eines solchen Salzes eine hohe elektrische Leitfähigkeit aufweist.

Aus der DE-A-31 31 251 sind in bestimmter Weise hergestellte Formkörper aus Polystyrol bekannt, in welches 0,8 bis 1,6 Gew.% eines CT-Komplexes eingearbeitet wurden. Die spezifische Leitfähigkeit dieses Materials liegt zwischen $10^{-6}$ und $10^{-2}$ S/cm, jedoch hat es den grundsätzlichen Nachteil, daß der CT-Komplex über die gesamte Masse verteilt ist, was in der Regel, z.B. für Abschirmungszwecke, nicht erforderlich ist.

Weiterhin ist es aus DE-B-15 44 976 bekannt, stickstoffhaltige Polymere durch Massezusatz von Radikalionensalzen leitfähig zu machen.

Nach der EP-A-134 026 sind Kunststoff-Formkörper mit hoher Oberflächenleitfähigkeit erhältlich, indem man zu ihrer Herstellung Polymere verwendet, die in der Masse 0,2 bis 5 Gew.% eines Elektronenakzeptors enthalten. Nach der Formgebung wird der Formkörper sodann in ein Bad getaucht, welches einen Elektronendonor enthält. Der Elektronendonor diffundiert in den Formkörper hinein und bildet in der Oberflächenschicht zusammen mit dem bereits vorhandenen Elektronenakzeptor den die Oberflächenleitfähigkeit bewirkenden CT-Komplex. Auch dieses Verfahren hat schwerwiegende Nachteile:

i) der Großteil des teuren Elektronenakzeptors bleibt ungenutzt und

ii) die anderen Eigenschaften des Polymeren werden durch die große Menge an Elektronenakzeptor beeinträchtigt.

Der Erfindung lag daher die Aufgabe zugrunde, Formteile mit elektrisch leitender Oberflächenschicht

herzustellen und die bisher hiermit verbundenen Nachteile zu vermeiden.

Demgemäß wurde ein Verfahren zur Erzeugung einer elektrisch leitfähigen Oberflächenschicht auf Formkörpern aus Kunststoffen, deren Leitfähigkeit auf einem hierin eingelagerten System von

- organischen Elektronenakzeptoren (I) einerseits und
- organischen Elektronendonoren (II), Jodiden (III) oder Gemischen von (II) und (III) als Elektronendonoren andererseits

beruht, gefunden, das dadurch gekennzeichnet ist, daß man die Formkörper mit Lösungen dieser Komponenten in organischen Lösungsmitteln, in denen die Kunststoffe löslich oder quellber sind, behandelt, indem man die FormKörper durch Tauchen, Besprühen oder Bestreichen mit den Behandlungslösungen in Berührung bringt.

Außerdem wurde gefunden, daß die besonderen Ausgestaltungen der Erfindung gemäß den Unteransprüchen vorteilhaft sind.

Dieses Verfahren ist auf Formkörper aus allen Kunststoffen anwendbar, die löslich oder quellbar sind und somit eine Diffusion der Behandlungslösungen in die Oberfläche der Formteile ermöglichen. Geeignete Kunststoffe sind daher in erster Linie Thermoplaste oder deren Gemische, aber auch solche Materialien, die nur leicht vernetzt sind und deswegen noch quellbar sind. Geeignet sind Homo- und Copolymerisate, die Vinylacetat, Vinylcarbazol, Vinylchlorid, Vinylpyridin, Vinylpyrrolidon, Vinylidenchlorid, Vinylidenfluorid, p-Methylstyrol, Olefine, Acrylsäure, Acrylsäureester, Acrylamid, Methacrylsäure, Methacrylsäureester, Methacrylamid, Maleinsäure oder Maleinsäureester enthalten, und/oder in deren Hauptkette Verknüpfungseinheiten wie Urethan-, Carbonat-, Ester-, Amid-, Ether-, Thioether-, Acetal-, Keton-, oder Sulfongruppierungen wiederkehren, insbesondere Homo- und Copolymerisate des Styrols,$\alpha$-Methylstyrols, Butadiens, Acryl- oder Methacrylnitrils, von $C_1$-$C_{18}$-Alkylacrylaten oder -Methacrylaten. Beispiele sind Pfropfcopolymerisate aus Styrol, Acrylnitril, Butadien und $C_1$-$C_{18}$-Alkylacrylat und solche aus Styrol, Acrylnitril und $C_1$- bis $C_{18}$-Alkylacrylat oder Gemische dieser Polymerisate mit solchen, die in der Hauptkette Carbonatgruppen enthalten. Diese Kunststoffe sind dem Fachmann bekannt und z.B. in H. Saechting, "Kunststoff-Taschenbuch", 22. Ausgabe, Carl Hanser Verlag 1983, beschrieben.

Die Lösungsmittel sollen sowohl ein ausreichendes Lösungs- bzw. Quellungsvermögen für die Kunststoffe als auch für die Komponenten I bis III haben. Derartige Lösungsmittel sind dem Fachmann bekannt oder können durch einige Vorversuche leicht ermittelt werden. Da es sich bei den Komponenten (I) und (II) um Verbindungen mit hochkonjugierten Charakter handelt, kommen als Lösungsmittel in erster Linie aromatische Verbindungen wie Benzol, Toluol, Xylol, Chlorbenzol oder Dichlorbenzol, aber auch nichtaromatische Lösungsmittel wie Dichlormethan, Chloroform oder 1,1,1-Trichlorethan in Betracht, zumal diese meist auch ein gutes Lösungsvermögen für Kunststoffe aller Art haben. Die Lösungsmittel für (III) sollten eher polaren Charakter haben, wie beispielsweise Acetonitril, Nitromethan, Dimethylformamid, Dichlormethan, Chloroform, 1,1,1-Trichlorethan oder Tetrahydrofuran. Häufig ist es von Vorteil, Lösungsmittelgemische zu verwenden wie Toluol/Acetonitril, Chlorbenzol/Dimethylformamid oder Xylol/Tetrahydrofuran.

Die Konzentrationen von (I), (II) bzw. (III) liegen vorzugsweise zwischen 0,01 und 20 Gew.%, können aber, je nach den Applikationsbedingungen auch höher, etwa bis zu 30 Gew.% sein.

Die Behandlung mit den Komponenten (I) bis (III) kann entweder mit einer Lösung, die (I), (II) und/oder (III) enthält, oder mit getrennten Lösungen nacheinander in beliebiger Reihenfolge durchgeführt werden. Das Formteil kann bevorzugt durch Tauchen, aber auch durch Besprühen oder Bestreichen mit den Lösungen in Berührung gebracht und anschließend getrocknet werden. Die Behandlung kann auch mit derselben Lösung mehrfach, bevorzugt mit Zwischentrocknung, durchgeführt werden.

Die Verweilzeit des Formteils in den Lösungen sollte so gewählt sein, daß der Kunststoff oberflächlich anquillt, so daß einerseits ein Teil von (I), (II) und/oder ( III) in die Oberfläche des Formteils eindiffundieren und dort die elektrisch leitfähigen Kristalle bilden kann und andererseits das Formteil nicht irreversibel beschädigt wird. Die Verweilzeit wird daher bei Raumtemperatur üblicherweise zwischen 0,5 und 120 Minuten, vorzugsweise zwischen 1 und 30 Minuten, liegen, Durch Erhöhung der Temperatur werden physikalische Vorgänge, wie Diffusion und Quellung, bekanntermaßen beschleunigt, so daß die Verweilzeit beim Arbeiten oberhalb von Raumtemperatur entsprechend verkürzt werden kann. Die Trocknung kann nach üblichen Verfahren, z.B. durch Wärme oder Vakuum, erfolgen.

Mit dem erfindungsgemäßen Verfahren werden (I) bis (III) in der Regel in einer Konzentration von $10^{-3}$ bis 20, insbesondere von $10^{-2}$ bis 10 g/m$^2$, auf die Oberfläche des Formteils gebracht, so daß der Oberflächenwiderstand auf $10^8$ bis $10^2$ Ohm sinkt.

Als Elektronenakzeptoren I haben sich die Tetracyanchinodimethane der Formel (IV)

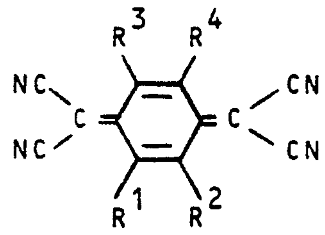

(IV)

und die N,N'-Dicyanchinondiimine der Formel (V)

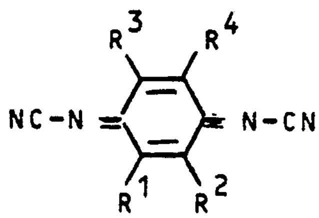

(V)

die aus der DE-A-34 37 814 bekannt sind, bewährt. Als Elektronendonoren(ii) eignen sich die Tetrachalkogenafulvalene der Formel (VI)

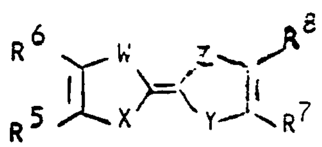

(VI).

In den Formeln (IV) und (V) stehen $R^1$, $R^2$, $R^3$ und $R^4$ unabhängig voneinander für Methyl, Ethyl, Propyl, Isopropyl, Methoxy, Ethoxy, Propoxy, Butoxy, Pentoxy, Methylthio, Fluor, Chlor, Brom, Cyan oder insbesondere für Wasserstoff oder einer der Reste $R^1$ oder $R^2$ und/oder einer der Reste $R^3$ oder $R^4$ für Phenyl oder Butyl oder $R^1$ und $R^2$ und/oder $R^3$ und $R^4$ zusammen für einen Rest der Formel

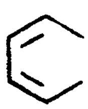 , 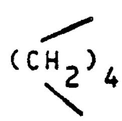 , 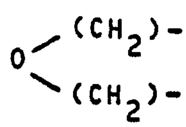 oder 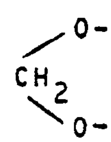

worin die ankondensierten, aromatischen Ringe gegebenenfalls durch ein oder zwei Chlor, Brom oder Methoxy und/oder Methyl substituiert sind. In der Formel (VI) stehen $R^5$, $R^6$, $R^7$ und $R^8$ unabhängig voneinander für Methyl, Ethyl, Phenyl, Methylphenyl, Methoxyphenyl, insbesondere für Wasserstoff, oder $R^5$ und $R^6$ und/oder $R^7$ und $R^8$ zusammen jeweils für einen Rest der Formel

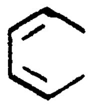 , 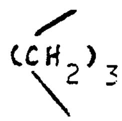 , 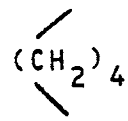 , 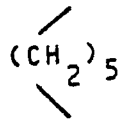 , 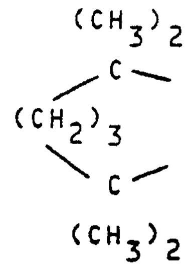

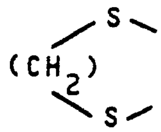 , 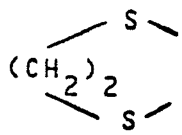 oder 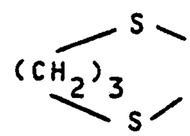

und X, Y, W und Z für Selen oder vorzugsweise für Schwefel. Als Jodide(III) finden üblicherweise die Salze der Formel

$M^{m+} J_m^-$

Verwendung, worin M für ein m-wertiges Alkali-, Erdalkali- oder Übergangsmetall, Zinn, Blei, Thallium, Ammonium, Phosphonium, Arsonium oder Stibonium, insbesondere für Kupfer, Silber, Pyridinium, N-Methylpyridinium, Chinolinium, N-Methylchinolinium, Phenazinium, N-Methylphenazinium, Tetramethylammonium, Tetraethylammonium, Tetrabenzylammonium, Trimethylbenzylammonium oder Tri ethylbenzylammonium und
m für 1, 2 oder 3 stehen.

Ferner sind als Elektronenakzeptoren (I) auch Metallkomplexe der Formel

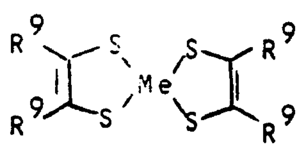

worin Me Pt oder Pd und $R^9$ -CN, $-CH_3$ oder $-CF_3$ bedeuten, oder deren Ammoniumsalze, 2,4,5-Trinitro-9-(dicyanmethylen)-fluoren oder Tetracyanethylen und als Elektronendonoren (II) N-Methyl-carbazol, Tetracen, Pentacen, Tetrathiatetracen

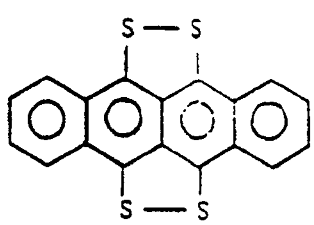

oder die Diazoverbindung

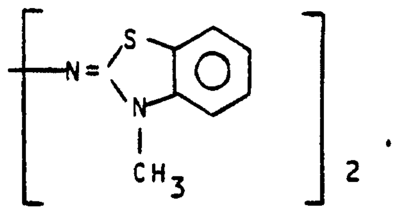

verwendbar. Diese und andere geeignete Verbindungen sind in R.C. Wheland et al, Journal American Chemical Society 98 (1976) 3916 beschrieben.

Üblicherweise werden Formkörper wie Fasern, Folien, Platten oder durch Kalandrieren, Extrudieren, Spritzguß oder Schleuderguß hergestellte Teile dem erfindungsgemäßen Verfahren unterzogen, um als elektromagnetische Abschirmung und/oder zur Ableitung elektrostatischer Aufladungen oder als elektrische Leiterbahnen zu dienen.

Mit dem erfindungsgemäßen Verfahren lassen sich ohne Verlust an Wirksubstanz an der Oberfläche leitende Formteile aus Kunststoffen herstellen, dessen übrige Eigenschaften nicht durch Fremdstoffe im Inneren des Formteile verschlechtert werden. Das Verfahren ist praktisch auf beliebige Formteile aus beliebigen quellbaren Kunststoffen anwendbar, wobei die erfindungsgemäß aufgebrachte elektrisch leitfähige Schicht fest in der Oberfläche des Formstückes haftet.

Beispiel 1

Ein Formkörper aus einem handelsüblichen ABS-Kunststoff aus einem Emulsionspfropfmischpolymerisat aus 54 Gew.% Styrol, 18 Gew.% Butadien und 28 Gew.% Acrylnitril mit einer Vicat-Erweichungstemperatur von 99 °C, gemessen nach DIN 53 460 (VST/B/50) und einem Schmelzindex von 14 g/10 min, gemessen nach DIN 53 735 (220/10), wurde 5 Minuten in eine Lösung von 1,7 g N,N'-Dicyan-p-benzochinondiimin in 250 ml Toluol getaucht. Nach dem Trocknen an Luft wurde derselbe Formkörper in eine Lösung von 30 g Kupfer-I-jodid in 200 ml Acetonitril getaucht, wobei er sich mit einer blau-schwarzen Schicht überzog. Anschließend wurde an der Luft getrocknet. Der Oberflächenwiderstand des Formkörpers erniedrigte sich von $10^{13}$ Ohm vor der Behandlung auf $1.10^{6}$ Ohm nach der Behandlung.

Beispiel 2

Ein Formkörper aus einem handelsüblichen ASA-Kunststoff aus 55 Gew.% Styrol, 17 Gew.% n-Butylacrylat und 28 Gew.% Acrylnitril mit einer Vicat--Erweichungstemperatur von 98 °C, gemessen nach DIN 53 460 (VST/B/50) und einem Schmelzindex von 8 g/10 min, gemessen nach DIN 53 735 (220/10), wurde 5 Minuten in eine Lösung von 1,7 g N,N'-Dicyan-p-benzochinon-diimin in 250 ml Toluol getaucht. Nach Trocknen an Luft wurde der Formkörper 1 Minute in eine Lösung von 2 g Kupfer-I-jodid in 200 ml Acetonitril getaucht, wobei er sich mit einer blauschwarzen Schicht überzog. Der Oberflächenwiderstand des Formkörpers fiel von $7.10^{13}$ Ohm vor der Behandlung auf $4,2.10^{5}$ Ohm nach der Behandlung.

Beispiel 3

Ein Formkörper aus einem handelsüblichen Blend aus 60 Gew.% Polycarbonat auf Basis Bisphenol A und 40 Gew.% eines ASA-Polymers aus 30 Gew.% Butylacrylat, 53 Gew.% Styrol und 17 Gew.% Acrylnitril mit einer Vicat-Erweichungstemperatur von 121 °C, gemessen nach DIN 53 460 (VST/B/50) und einem Schmelzindex von 4 g/10 min, gemessen nach DIN 53 735 (220/10), wurde wie in Beispiel 2 behandelt. Der Oberflächenwiderstand erniedrigte sich durch die Behandlung von $7.10^{13}$ Ohm auf $7,1.10^{5}$ Ohm.

Beispiel 1-3

Die nach den Beispielen 1 bis 3 behandelten Proben wurden bei 80 °C an der Luft gelagert und der Anstieg des Widerstands in Abhängigkeit von der Zeit gemessen. Die Ergebnisse sind in der Tabelle zusammengefaßt.

**Tabelle: Oberflächenwiderstand [Ω] nach Lagerung bei 80°C an der Luft in Abhängigkeit von der Zeit.**

| Zeit [Tage] | Beispiel 1 | Beispiel 2 | Beispiel 3 |
|---|---|---|---|
| 0 | 1 $10^6$ | 4,2 $10^5$ | 7,1 $10^5$ |
| 10 | 2,5 $10^7$ | 4,1 $10^6$ | 3,5 $10^6$ |
| 20 | 7,4 $10^7$ | 2,3 $10^7$ | 3,7 $10^7$ |
| 30 | 1,8 $10^8$ | 1,7 $10^8$ | 6,3 $10^8$ |

Beispiel 4

Ein Formkörper aus dem in Beispiel 3 verwendeten Kunststoff wurde 5 Minuten in eine Lösung von 1,7 g N,N'-Dicyan-p-benzochinondiimin und 0,6 g 2,5-Dimethyl-N,N'-dicyan-p-benzochinondiimin in 250 ml Toluol getaucht. Nach Trocknen an Luft wurde der Formkörper eine Minute in eine Lösung Von 2 g Kupfer-I-jodid in 200 ml Acetonitril getaucht, wobei er sich mit einer blauschwarzen Schicht überzog. Der Oberflächenwiderstand fiel durch die Behandlung von $7.10^{13}$ Ohm auf $4{,}2.10^5$ Ohm.

Beispiel 5

Ein Formkörper aus dem in Beispiel 2 verwendeten Kunststoff wurde wie in Beispiel 4 behandelt. Sein Oberflächenwiderstand erniedrigte sich dabei von $7.10^{13}$ Ohm auf $2{,}4.10^5$ Ohm.

Beispiel 6

Ein Formkörper aus dem in Beispiel 2 angegebenen Kunststoff wurde mit einer Lösung von 1 g Kupfer-I-iodid in 100 ml Acetonitril besprüht und 5 min. an der Luft getrocknet. Anschließend wurde derselbe Formkörper mit einer Lösung von 0,85 g N,N'-Dicyan-p-benzochinondiimin in 125 ml Toluol besprüht und nochmals luftgetrocknet. Der Oberflächenwiderstand erniedrigte sich durch die Behandlung auf $1.10^5$ Ohm.

Beispiel 7

Ein Formkörper aus dem in Beispiel 3 genannten Kunststoff wurde wie in Beispiel 6 behandelt. Anschließend wurde das Besprühen mit der Akzeptorlösung zweimal wiederholt. Der Oberflächenwiderstand erniedrigte sich dabei auf $2.10^5$ Ohm.

Beispiel 8

Es wurde wie in Beispiel 7 verfahren, jedoch wurde die Reihenfolge der Behandlung mit Kupfer-I-iodid- und der Akzeptorlösung vertauscht. Der Oberflächenwiderstand erniedrigte sich auf $5.10^4$ Ohm.

## Patentansprüche

1. Verfahren zur Erzeugung einer elektrisch leitfähigen Oberflächenschicht auf Formkörpern aus Kunststoffen, deren Leitfähigkeit auf einem hierin eingelagerten System von

   - organischen Elektronenakzeptoren (I) einerseits und
   - organischen Elektronendonoren (II), Jodiden (III) oder Gemischen von (II) und (III) als Elektronendonoren andererseits

   beruht, dadurch gekennzeichnet, daß man die Formkörper mit Lösungen dieser Komponenten in organischen Lösungsmitteln, in denen die Kunststoffe löslich oder quellbar sind, behandelt, indem man die Formkörper durch Tauchen, Besprühen oder Bestreichen mit den Behandlungslösungen in Berührung bringt.

2. Verfahren nach Anspruch 1, dadurch gekennzeichnet, daß man solche Lösungen verwendet, welche die Komponenten (I) und (II) oder (I) und (III) oder (I), (II) und (III) gemeinsam enthalten.

3. Verfahren nach Anspruch 1, dadurch gekennzeichnet, daß man die Behandlung in beliebiger Reihenfolge mit Lösungen vornimmt, die jeweils nur eine der Komponenten (I), (II) und ( III) enthalten.

4. Verfahren nach Anspruch 3, dadurch gekennzeichnet, daß man die Formkörper zwischen den Behandlungsschritten trocknet.

5. Verfahren nach den Ansprüchen 1 bis 4, dadurch gekennzeichnet, daß man als organische Elektronenakzeptoren (I) Tetracyanchinodimethane (Ia), N,N'-Dicyanchinondiimine (Ib) oder Gemische davon

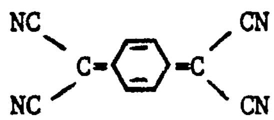

(Ia)

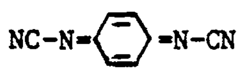

(Ib)

oder deren kernsubstituierte Derivate verwendet.

6. Verfahren nach den Ansprüchen 1 bis 5, dadurch gekennzeichnet, daß man als organische Elektronendonoren (II) Tetrachalkogenafulvalene (IIa) der Formel

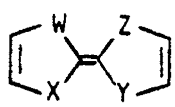

(IIa),

worin X, Y, W und Z unabhängig voneinander Schwefel oder Selen bedeuten, oder deren Derivate verwendet.

7. Verfahren nach den Ansprüchen 1 bis 6, dadurch gekennzeichnet, daß man als Jodide(III)Kupfer-, Silber-, Pyridinium-, N-Methylpyridinium-, Chinolinium-, N-Methylchinolinium-, Phenazinium-, N-Methylphenazinium-, Tetramethylammonium-, Tetraethylammonium-, Tetrabenzylammonium-, Trimethylbenzylammonium- oder Triethylbenzylammoniumjodid verwendet.

8. Verfahren nach den Ansprüchen 1 bis 7, dadurch gekennzeichnet, daß man Formkörper aus Homo- oder Copolymerisaten des Styrols, α-Methylstyrols, Butadiens, Acryl- oder Methacrylnitrils, von $C_1$-$C_{18}$-Alkylacrylaten oder -Methacrylaten behandelt.

9. Verfahren nach den Ansprüchen 1 bis 8, dadurch gekennzeichnet, daß man Formkörper aus Pfropfcopolymerisaten aus Styrol, Acrylnitril, Butadien und/oder $C_1$-$C_{18}$-Alkylacrylaten oder deren Gemischen mit Polymerisaten, die in der Hauptkette Carbonatgruppen enthalten, behandelt.

10. Verwendung der nach den Ansprüchen 1 bis 8 erhältlichen Formkörper zur elektromagnetischen Abschirmung, als antielektrostatische Formkörper oder als elektrische Leiterbahnen.

## Claims

1. A process for the production of an electrically conductive surface layer on moldings consisting of plastics, the conductivity of the said layer being based on a system, incorporated therein, of
   - organic electron acceptors (I) on the one hand and

- organic electron donors (II), iodides (III) or a mixture of (II) and (III) as electron donors, on the other hand,

wherein the moldings are treated with solutions of these components in organic solvents in which the plastics are soluble or swellable, by bringing the moldings into contact with the treatment solutions by immersion, spraying or painting.

**2.** A process as claimed in claim 1, wherein the solutions used contain the components (I) and (II) or (I) and (III) or (I), (II) and (III) together.

**3.** A process as claimed in claim 1, wherein the treatment is carried out in any order using solutions which each contain only one of the components (I), (II) and (III).

**4.** A process as claimed in claim 3, wherein the moldings are dried between the treatment steps.

**5.** A process as claimed in claim 1 or 2 or 3 or 4, wherein the organic electron acceptors (I) used are tetracyanoquinodimethanes (Ia), N,N'-dicyanoquinonediimines (Ib) or a mixture of these

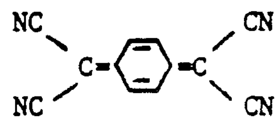

(Ia)

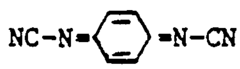

(Ib)

or their derivatives substituted in the nucleus.

**6.** A process as claimed in claim 1 or 2 or 3 or 4 or 5, wherein the organic electron donors (II) used are tetrachalcogenafulvalenes (IIa) of the formula

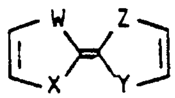

(IIa)

where X, Y, W and Z independently of one another are each sulfur or selenium, or their derivatives.

**7.** A process as claimed in claim 1 or 2 or 3 or 4 or 5 or 6, wherein the iodide (III) used is copper, silver, pyridinium, N-methylpyridinium, quinolinium, N-methylquinolinium, phenazinium, N-methylphenazinium, tetramethylammonium, tetraethylanmonium, tetrabenzylammonium, trimethylbenzylammonium or triethylbenzylammonium iodide.

**8.** A process as claimed in claim 1 or 2 or 3 or 4 or 5 or 6 or 7, wherein moldings of homo- or copolymers of styrene, α-methylstyrene, butadiene, acrylonitrile, methacrylonitrile or $C_1$-$C_{18}$-alkyl acrylates or methacrylates are treated.

**9.** A process as claimed in claim 1 or 2 or 3 or 4 or 5 or 6 or 7 or 8, wherein moldings of graft copolymers of styrene, acrylonitrile, butadiene and/or $C_1$-$C_{18}$-alkyl acrylates, or blends of these with polymers which contain carbonate groups in the main chain, are treated.

**10.** Use of the moldings obtainable as claimed in claim 1 or 2 or 3 or 4 or 5 or 6 or 7 or 8 for electromagnetic shielding, as antielectrostatic moldings or as electrical conductor paths.

## Revendications

1. Procédé de formation, sur des corps moulés en matières plastiques, d'une couche électroconductrice dont la conductivité repose sur un système
   - d'accepteurs organiques d'électrons (I) d'une part et
   - de donneurs organiques d'électrons (II), d'iodures (III) ou de mélanges de (II) et de (III) servant de donneurs d'électrons d'autre part,

   qui y est incorporé, caractérisé en ce qu'on traite les corps moulés par des solutions de ces composants dans des solvants organiques dans lesquels les matières plastiques sont solubles ou gonflables, en mettant les corps moulés on contact avec les solutions de traitement par immersion, pulvérisation ou enduction.

2. Procédé selon la revendication 1, caractérise en ce qu'on utilise des solutions qui contiennent en commun les composants (I) et (II) ou (I) et (III) ou (I), (II) et (III).

3. Procédé selon la revendication 1, caractérisé en ce qu'on procède au traitement dans n'importe quel ordre par des solutions qui ne contiennent chacune que l'un dos composants (I), (II) et (III).

4. Procédé selon la revendication 3, caractérisé en ce qu'on sèche les corps moulés entre les phases de traitement.

5. Procédé selon l'une quelconque des revendications 1 à 4, caractérisé en ce qu'on utilise, comme accepteurs organiques d'électrons (I), du tétracyanoquino-diméthane (Ia), de la N,N'-dicyanoquinonediiimine (Ib) ou des mélanges de ceux-ci

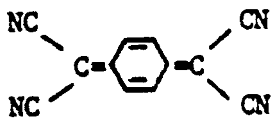

(Ia)

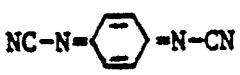

(Ib)

ou des dérivés de ceux-ci substitués sur le noyau.

6. Procédé selon l'une quelconque des revendications 1 à 5, caractérisé en ce qu'on utilise, comme donneurs organiques d'électrons (II), des tétrachalcogénafulvalènes (IIa) de formule

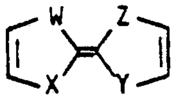

(IIa),

dans laquelle X, Y, W et Z représentent, indépendamment les uns des autres, des atomes de soufre ou de sélénium.

7. Procédé selon l'une quelconque des revendications 1 a 6, caractérisé en ce qu'on utilise, comme iodures (III), l'iodure de cuivre, d'argent, de pyridinium, de N-méthylpyridinium, de quinoléinium, de N-méthylquinoléinium, de phénazinium, de N-méthylphénazinium, de tétraméthylammonium, de tétraéthylammonium, de tétrabenzylammonium, de triméthylbenzylammonium ou de triéthylbenzylammonium.

8. Procédé selon l'une quelconque des revendications 1 à 7, caractérisé en ce qu'on traite des corps moulés en homo- ou copolymères du styrène, de l'α-méthylstyrène, du butadiène, de l'acrylo- ou méthacrylonitrile, d'acrylates ou de méthacrylates d'alkyle en $C_1$-$C_{18}$.

9. Procédé selon l'une quelconque des revendications 1 à 8, caractérisé en ce qu'on traite des corps

moulés en copolymères greffés de styrène, d'acrylonitrile, de butadiène et/ou d'acrylates d'alkyle en $C_1$-$C_{18}$ ou en des mélanges de ceux-ci avec des polymères qui contiennent des groupements carbonate dans la chaîne principale.

**10.** Utilisation des corps moulés obtenus suivant l'une quelconque des revendications 1 à 8 pour le blindage électromagnétique, comme corps moulés antiélectrostatiques ou comme pistes électroconductrices.